# EUROPEAN PATENT APPLICATION

(11) **EP 4 706 812 A1**
(43) Date of publication of application: **11.03.2026**
(21) Application number: 24913806.6
(22) Date of filing: 13.12.2024
(51) Int. Cl.: B01J 19/08, B01J 8/02, B01J 19/24, B01J 19/00, B01J 8/06

(54) **ELECTRIC HEATING REACTOR**

(30) Priority: 26.12.2023 KR 20230190926
(71) Applicant: LG Chem, Ltd., Seoul 07336 (KR)
(72) Inventor: KWON, Hyun Jee, Daejeon 34122 (KR); KANG, Mooseong, Daejeon 34122 (KR); PARK, Hongseok, Daejeon 34122 (KR); CHOI, Jaehoon, Daejeon 34122 (KR)
(74) Representative: Hoffmann Eitle
(86) International application number: PCT/KR2024/096897
(87) International publication number: WO 2025/144002

(57) **Abstract**

Disclosed is an electric heating reactor. The reactor includes: a reaction tube including a passage formed therein in a length direction, through which a reactant passes; a power source configured to supply power to the reaction tube to heat the reactant passing through the passage; a pair of conductive sockets configured to connect the power source to the reaction tube to enable current flow; and a heating element extending inside the reaction tube in the length direction, electrically connected to the reaction tube, and configured to generate heat by receiving power supplied from the power source and further heat the reactant passing through the passage.

## Description

### [Technical Field]

### CROSS-REFERENCE TO RELATED APPLICATION

This application claims priority to and the benefit of Korean Patent Application No. 10-2023-0190926 filed with the Korean Intellectual Property Office on December 26, 2023, the entire contents of which are incorporated herein by reference.

The present disclosure relates to an electric heating reactor, and more particularly, to an electric heating reactor that may uniformly heat the inside of a reaction tube by disposing a heating element inside the reaction tube.

### [Background Art]

In a chemical industry, various facilities (e.g., crackers, reformers, reactors, and boilers) are maintained at a high temperature by using a natural gas as a fuel. However, heating by natural gas combustion is not only inefficient in terms of energy consumption but also a major cause of carbon emissions. Therefore, efforts are being made to replace the heating method by the natural gas combustion with an electric heating method.

In general, in the electric direct-heating method, a current is applied to a tubular reactor having high resistivity to heat the reactor itself. If the reactor itself generates heat, heat may not be uniformly transferred to the center of the reactor, and a cold spot may occur in a high-temperature endothermic reaction.

For example, dry reforming of methane (DRM) refers to a reaction that simultaneously converts methane and carbon dioxide, which are greenhouse gases, to produce synthetic gas (e.g., hydrogen or carbon monoxide), which is a raw material for a chemical product. When using the DRM, the conversion reaction may occur as reaction gases pass through a catalyst, and the DRM is an endothermic reaction that requires a high temperature of 800°C or higher. Due to a property of the endothermic reaction, the cold spot may occur in a part where the reaction proceeds rapidly, which may cause coking, i.e., carbon deposition, thereby shortening a lifespan of the catalyst.

The above information disclosed in this Background section is provided only to assist in a better understanding of the background of the present disclosure, and may therefore include information that is not a part of the prior art already known to those skilled in the art to which the present disclosure pertains.

### [Disclosure]

### [Technical Problem]

The present disclosure attempts to provide an electric direct-heating reactor that may uniformly heat the inside of a reaction tube by disposing a heating element inside the reaction tube.

The present disclosure also attempts to provide an electric direct-heating reactor that may suppress occurrence of a cold spot by uniformly heating the inside of a reaction tube.

### [Technical Solution]

According to an embodiment, provided is an electric heating reactor including: a reaction tube including a passage formed therein in a length direction, through which a reactant passes; a power source configured to supply power to the reaction tube to heat the reactant passing through the passage; a pair of conductive sockets configured to connect the power source to the reaction tube to enable current flow; and a heating element extending inside the reaction tube in the length direction, electrically connected to the reaction tube, and configured to generate heat by receiving the power supplied from the power source and further heat the reactant passing through the passage.

The heating element may have a circular cross-section.

The heating element may have a cross-section in which at least two plates intersect each other.

The reactor may further include a pair of connectors configured to electrically connect the heating element to the reaction tube.

The pair of connectors may be welded or screwed to the heating element or the reaction tube.

The reactor may further include an insulator configured to surround and thermally insulate at least a portion of the reaction tube.

The insulator may surround the reaction tube between the pair of conductive sockets.

The reactor may further include a cooler configured to cool at least one of the pair of conductive sockets.

An amount of heat generated by the reaction tube and an amount of heat generated by the heating element may be controlled by adjusting resistances of the reaction tube and the heating element.

### [Advantageous Effects]

According to the present disclosure, both the reaction tube and the heating element may generate heat by disposing the heating element inside the reaction tube and supplying power to both the reaction tube and the heating element. Accordingly, the inside of the reaction tube may be uniformly heated and the occurrence of cold spots may be suppressed.

The inside of the reaction tube may be heated uniformly, thereby alleviating the non-uniform occurrence of the endothermic reaction caused by the cold spot.

In addition, any advantage which may be acquired or inferred from an embodiment of the present disclosure is directly or implicitly disclosed in the detailed description of an embodiment of the present disclosure. That is, various advantages inferred from an embodiment of the present disclosure are disclosed in the detailed description described below.

### [Description of the Drawings]

Embodiments in the specification may be better understood by reference to the following description in connection with the accompanying drawings in which like reference numerals refer to identical or functionally similar elements.
FIG. 1 is a schematic view showing an electric heating reactor according to an embodiment of the present disclosure.
FIG. 2 is a schematic view showing an electric heating reactor according to another embodiment of the present disclosure.
FIG. 3 is a plan view showing an example of a heating element.
FIG. 4 is a schematic view showing an example of portion "A1" in FIG. 3.
FIG. 5 is a schematic view showing another example of portion "A1" in FIG. 3.
FIG. 6 is a cross-sectional view showing an example of the heating element.
FIG. 7 is a plan view showing another example of the heating element.
FIG. 8 is a cross-sectional view showing yet another example of the heating element.

It should be understood that the drawings referenced above are not necessarily drawn to scale, and present a rather simplified representation of various preferred features illustrating the basic principles of the present device. For example, specific design features of the present device, including a specific dimension, orientation, position and shape, are determined in part by the particular intended application and environment of use.

### [Mode for Invention]

A Term used herein is only to describe a specific embodiment, and is not intended to limit the present device. A term of a single number used herein is intended to include its plural number unless the context clearly indicates otherwise. It should also be understood that the terms "include" and/or "including", when used in the specification, specify the presence of the recited features, integers, steps, operations, elements and/or components, and do not exclude the presence or addition of one or more of other features, integers, steps, operations, elements, elements, components and/or groups thereof. The term "and/or" used herein includes any one or all combinations of the associated listed items.

Further, it should be understood that one or more of methods described below or aspects thereof may be executed by at least one controller. A term "controller" may refer to a hardware device including a memory and a processor. The memory may store program instructions, and the processor may be specifically programmed to execute the program instructions to perform one or more processes described below in more detail. The controller may control operations of units, modules, components, devices, or the like, as described herein. It should also be understood that the methods described below may be executed by an apparatus including the controller in conjunction with one or more other components, as appreciated by those skilled in the art.

In addition, the controller of the present disclosure may be implemented as a non-transitory computer-readable recording medium including executable program instructions executed by the processor. An example of the computer-readable recording medium may include a read only memory (ROM), a random access memory (RAM), a compact disk read only memory (CD-ROM), a magnetic tape, a floppy disk, a flash drive, a smart card, or an optical data storage device, and is not limited thereto. The computer-readable recording medium may also be distributed throughout a computer network, and the program instructions may thus be stored and executed in a distributed manner, for example, on a telematics server or a controller area network (CAN).

According to the present disclosure, the electric heating reactor includes: a reaction tube including a passage through which a reactant passes; a power source for supplying power to the reaction tube to heat the reactant passing through the passage; a pair of conductive sockets for connecting the power source to the reaction tube to enable current flow; and a heating element disposed inside the reaction tube, electrically connected to the reaction tube, and generating heat by receiving power supplied from the power source. When power from the power source is supplied to the reaction tube via the conductive socket, the reaction tube and the heating element may generate heat and uniformly transfer heat to the reactant passing through the passage. Accordingly, the inside of the reaction tube may be heated uniformly and occurrence of a cold spot may be suppressed. In addition, non-uniform occurrence of an endothermic reaction caused by the cold spot may be alleviated.

Hereinafter, an embodiment of the present disclosure is described in detail with reference to the accompanying drawings.

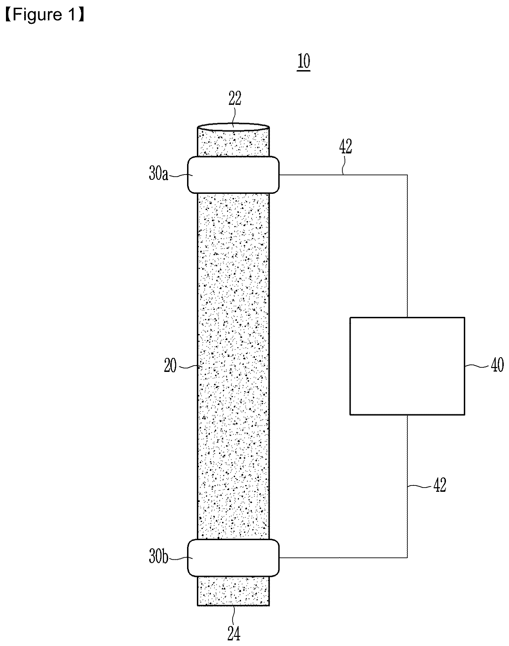

FIG. 1 is a schematic view showing an electric heating reactor according to an embodiment of the present disclosure.

As shown in FIG. 1, an electric heating reactor 10 according to an embodiment of the present disclosure may generate heat by receiving power and transfer heat to a reactant therein by using the generated heat. The electric heating reactor 10 may include a reaction tube 20, a power source 40, and a pair of conductive sockets (i.e., first and second conductive sockets 30a and 30b).

The reaction tube 20 may be made of an alloy material having high resistivity (e.g., nickel-chromium (Ni-Cr), iron-chromium (Fe-Cr), iron-nickel-chromium (Fe-Ni-Cr), or iron-chromium-aluminum (Fe-Cr-Al)), and include a passage formed therein in a length direction and through which the reactant passes. For example, the reaction tube 20 may be formed in an annular pipe shape and thus include the passage formed therein in the length direction. However, a shape of the reaction tube 20 is not limited to the annular pipe shape. The reaction tube 20 may have high resistivity. Accordingly, when power is applied to the reaction tube 20, heat may be generated in the reaction tube 20, and heat may be transferred to the reactant inside the passage.

An inlet 22 may be disposed at one end of the reaction tube 20, and the reactant required for reaction may be introduced into the reaction tube 20 through the inlet 22. An outlet 24 may be disposed at the other end of the reaction tube 20, and a product in which the reaction is completed and/or a reactant that does not undergo the reaction may be discharged from the reaction tube 20 through the outlet 24.

The power source 40 may supply power to the reaction tube 20. The power source 40 may be an alternating-current (AC) power source or a direct-current (DC) power source.

The pair of conductive sockets 30a and 30b may each electrically connect the power source 40 to the reaction tube 20. The reaction tube 20 may generate heat when the power source 40 supplies power to the reaction tube 20 via the pair of conductive sockets 30a and 30b. Heat may be transferred to the reactant passing through the passage, and the reactant may thus be heated. The first conductive socket 30a may be mounted on one end of the reaction tube 20 and electrically connect the power source 40 to one end of the reaction tube 20 via a wire 42. In addition, the second conductive socket 30b may be mounted on the other end of the reaction tube 20 and electrically connect the power source 40 to the other end of the reaction tube 20 via the wire 42. Accordingly, power from the power source 40 may be supplied to the reaction tube 20 via the first and second conductive sockets 30a and 30b, and the reaction tube 20 may generate heat and transfer the generated heat to the reactant passing through the passage.

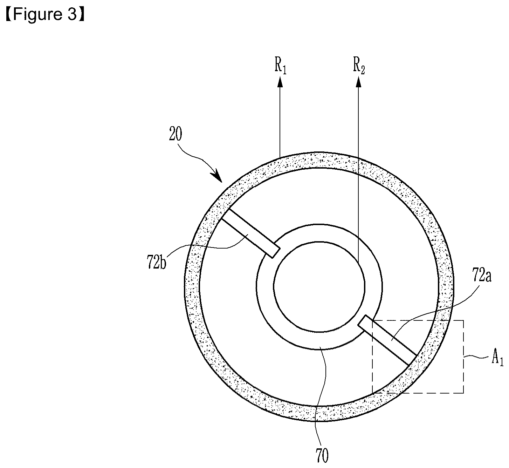

The electric heating reactor 10 according to an embodiment of the present disclosure may further include a heating element 70 (see FIGS. 3 to 8). The heating element 70 may be disposed inside the reaction tube 20 and extend in the length direction. The heating element 70 may be made of an alloy material having high resistivity (e.g., Ni-Cr, Fe-Cr, Fe-Ni-Cr, or Fe-Cr-Al) and may be made of the same material or a different material from the reaction tube 20. The heating element 70 may be electrically connected to the reaction tube 20. When the power source 40 supplies power to the reaction tube 20 via the pair of conductive sockets 30a and 30b, power may also be supplied to the heating element 70, and both the reaction tube 20 and the heating element 70 may generate heat. The heating element 70 may be disposed at the center of the reaction tube 20 to generate heat, and heat may be transferred to the reactant disposed far from an inner wall of the reaction tube 20. Accordingly, the reactant inside the reaction tube 20 may be uniformly heated by the reaction tube 20 and the heating element 70. The description describes the heating element 70 in more detail below.

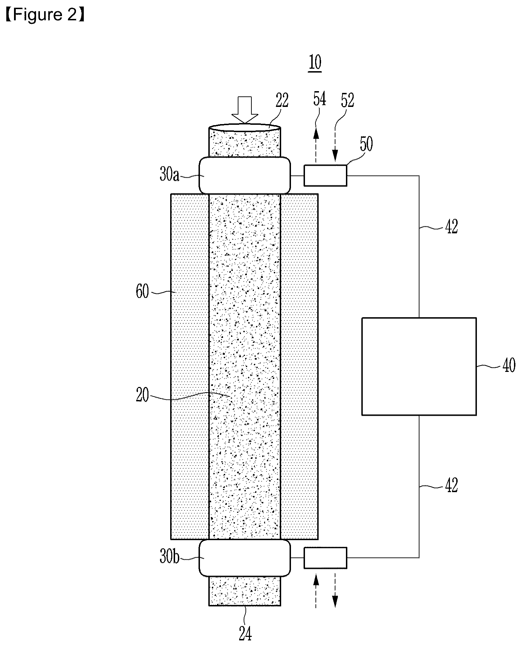

FIG. 2 is a schematic view showing an electric heating reactor according to another embodiment of the present disclosure.

As shown in FIG. 2, the electric heating reactor 10 according to another embodiment of the present disclosure may include the electric heating reactor 10 according to an embodiment of the present disclosure, a cooler 50, and an insulator 60. As described above, the electric heating reactor 10 may include the reaction tube 20, the power source 40, a pair of conductive sockets 32 and 34, and the heating element 70.

The inlet 22 may be disposed at one end of the reaction tube 20, and the reactant required for the reaction may thus be introduced into the reaction tube 20 through the inlet 22. The reaction tube 20 may be connected to the power source 40 via the pair of conductive sockets 32 and 34 and receive power from the power source 40 to generate heat. In addition, the heating element 70 may be disposed inside the reaction tube 20 and electrically connected to the reaction tube 20. Accordingly, when power is supplied to the reaction tube 20 from the power source 40, the power may also be supplied to the heating element 70, and the heating element 70 may thus also generate heat. The generated heat may be uniformly transferred to the reactant inside the reaction tube 20. The outlet 24 may be disposed at the other end of the reaction tube 20, and the product in which the reaction is completed and/or the reactant that does not undergo the reaction may be discharged from the reaction tube 20 through the outlet 24.

The cooler 50 may be disposed adjacent to at least one of the first and second conductive sockets 30a and 30b to cool the corresponding conductive socket 30a or 30b via heat transfer with the conductive socket 30a or 30b. To this end, the cooler 50 may be connected to a refrigerant inlet line 52 to enable a cold refrigerant to be introduced into the cooler 50 via the refrigerant inlet line 52, and the cooler 50 may be connected to a refrigerant outlet line 54 to enable the refrigerant that exchanges heat with the conductive sockets 30a and 30b to be discharged from the cooler 50 via the refrigerant outlet line 54. Here, FIG. 2 illustrates that the cooler 50 is disposed adjacent to the first and second conductive sockets 30a and 30b, and that the refrigerant exchanges heat with the conductive sockets 30a and 30b. However, the type and position of the cooler 50 are not limited thereto. For example, the cooler 50 may be a cooler utilizing a Peltier element or a refrigerant jacket disposed inside the conductive sockets 30a and 30b.

The insulator 60 may surround and thermally insulate at least a portion of the reaction tube 20. FIG. 2 illustrates that the insulator 60 surrounding the reaction tube 20 disposed between the pair of conductive sockets 32 and 34, and the present disclosure is not limited to. For example, the insulator 60 may surround the entire reaction tube 20. The insulator 60 may surround and thermally insulate the reaction tube 20, thereby reducing unnecessary heat loss to the outside of the reaction tube 20, thereby improving energy efficiency and efficiently maintaining a temperature inside the reaction tube 20 uniformly.

In addition, the insulator 60 may electrically insulate the reaction tube 20 and its outside, thereby preventing safety accidents that may occur due to a current that may flow in the reaction tube 20.

Hereinafter, the description describes more specifically the heating element that may be used in the electric heating reactor 10 according to an embodiment of the present disclosure.

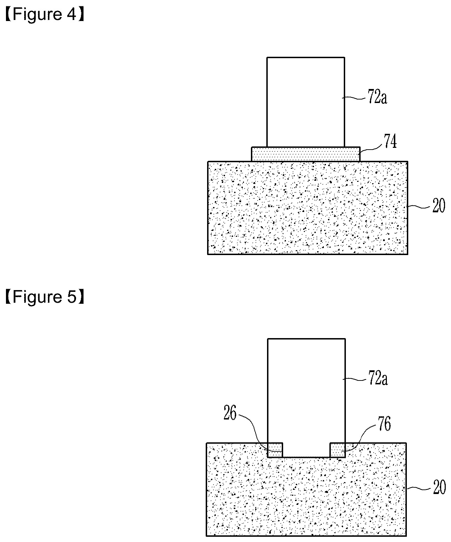

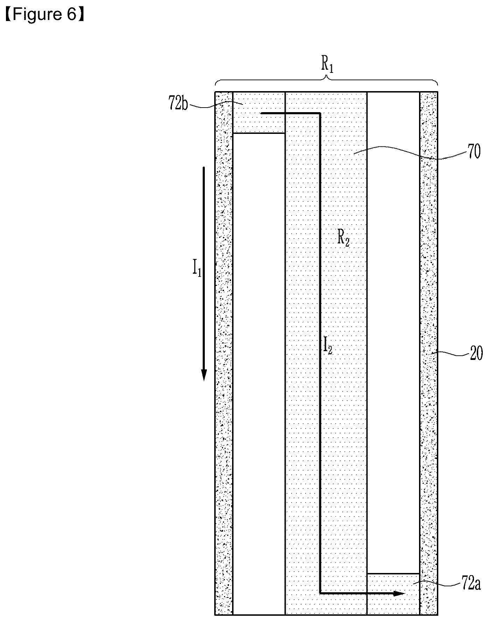

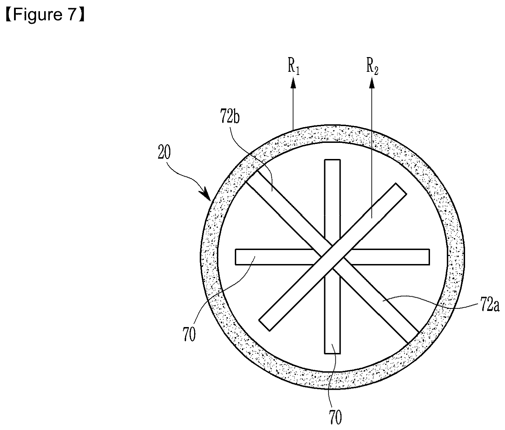

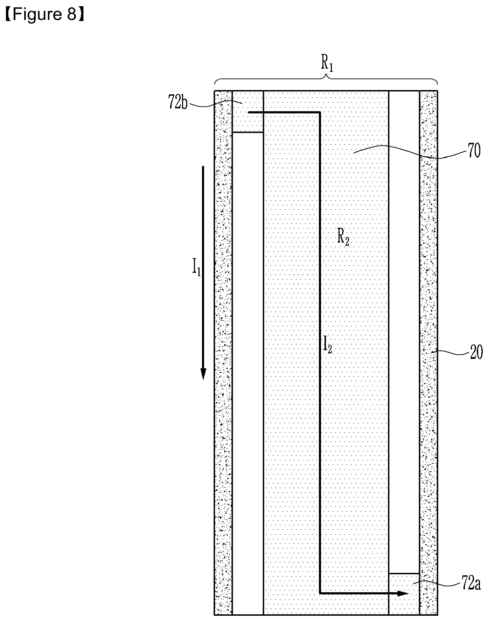

FIG. 3 is a plan view showing an example of the heating element; FIG. 4 is a schematic view showing an example of portion "A1" in FIG. 3; FIG. 5 is a schematic view showing another example of portion "A1" in FIG. 3; FIG. 6 is a cross-sectional view showing an example of the heating element; FIG. 7 is a plan view showing another example of the heating element; and FIG. 8 is a cross-sectional view showing yet another example of the heating element.

As shown in FIGS. 3 and 6, the heating element 70 according to an example may have a circular cross-section and extend in the length direction. Accordingly, the heating element 70 may have a pipe shape. The heating element 70 may have other end electrically connected to the other end of the reaction tube 20 via a first connector 72a and one end electrically connected to one end of the reaction tube 20 via a second connector 72b.

Each of the first and second connectors 72a and 72b may be welded or screw-coupled to the heating element 70 or the reaction tube 20. In an example, as shown in FIG. 4, each of the first and second connectors 72a and 72b may be welded to the reaction tube 20. In more detail, each of the first and second connectors 72a and 72b may be coupled to the heating element 70, the heating element 70 may be disposed inside the reaction tube 20, and each of the first and second connectors 72a and 72b may then be welded to the reaction tube 20 to have a welded part 74 formed between each of the first and second connectors 72a and 72b and the reaction tube 20. In another example, as shown in FIG. 5, each of the first and second connectors 72a and 72b may be screw-coupled to the reaction tube 20. In more detail, a first screw portion 26 may be disposed inside the reaction tube 20, and a second screw portion 76 corresponding to the first screw portion 26 may be disposed in each of the first and second connectors 72a and 72b, thereby screw-coupling the first and second screw portions 26 and 76 to each other. In yet another example, the first and second connectors 72a and 72b may be screw-coupled to one of the reaction tube 20 and the heating element 70, and welded to the other of the reaction tube 20 and the heating element 70. For example, as shown in FIG. 5, each of the first and second connectors 72a and 72b may be screw-coupled to the reaction tube 20, and the heating element 70 may then be disposed inside the reaction tube 20 and each of the first and second connectors 72a and 72b may be welded to the heating element 70. Accordingly, when power is supplied to the reaction tube 20 from the power source 40, the power may also be supplied to the heating element 70, and the heating element 70 may thus generate heat. The generated heat may be uniformly transferred to the reactant inside the reaction tube 20.

An amount of heat generated by the reaction tube 20 and an amount of heat generated by the heating element 70 may be controlled by adjusting resistances of the reaction tube 20 and the heating element 70. If a resistance R1 of the reaction tube 20 is greater than a resistance R2 of the heating element 70, a current I1 flowing through the reaction tube 20 may be less than a current I2 flowing through the heating element 70. Accordingly, the amount of heat generated by the heating element 70 may be greater than that generated by the reaction tube 20, and this configuration may be applied to a reaction in which more heat is required at the center of the reaction tube 20. In contrast, if the resistance R1 of the reaction tube 20 is less than the resistance R2 of the heating element 70, the current I1 flowing through the reaction tube 20 may be greater than the current I2 flowing through the heating element 70. Accordingly, the amount of heat generated by the reaction tube 20 may be greater than the amount of heat generated by the heating element 70, and this configuration may be applied to a reaction in which less heat is required at the center of the reaction tube 20.

As shown in FIGS. 7 and 8, the heating element 70 according to another example may have a cross-section in which at least two plates intersect each other. FIGS. 7 and 8 illustrate the heating element 70 having a cross-section in which four plates intersect one another. The other end of one of the four plates may be electrically connected to the other end of the reaction tube 20 via the first connector 72a, and one end of one of the four plates may be electrically connected to one end of the reaction tube 20 via the second connector 72b.

However, a shape of the heating element 70 is not limited thereto. For example, the heating element 70 may have a mesh, punched, or corrugated shape to increase a contact area with the reactant.

Although the embodiments of the present disclosure have been described hereinabove, the scope of the present disclosure is not limited thereto, and all equivalent modifications that may be easily made by those skilled in the art to which the present disclosure pertains are intended to fall within the scope and spirit of the present disclosure.

## Claims

1. An electric heating reactor comprising:
a reaction tube including a passage formed therein in a length direction, through which a reactant passes;
a power source configured to supply power to the reaction tube to heat the reactant passing through the passage;
a pair of conductive sockets configured to connect the power source to the reaction tube to enable current flow; and
a heating element extending inside the reaction tube in the length direction, electrically connected to the reaction tube, and configured to generate heat by receiving the power supplied from the power source and further heat the reactant passing through the passage.

2. The reactor of claim 1, wherein
the heating element has a circular cross-section.

3. The reactor of claim 1, wherein
the heating element has a cross-section in which at least two plates intersect each other.

4. The reactor of claim 2 or 3, further comprising
a pair of connectors configured to electrically connect the heating element to the reaction tube.

5. The reactor of claim 4, wherein
the pair of connectors are welded or screwed to the heating element or the reaction tube.

6. The reactor of claim 1, further comprising
an insulator configured to surround and thermally insulate at least a portion of the reaction tube.

7. The reactor of claim 6, wherein
the insulator surrounds the reaction tube between the pair of conductive sockets.

8. The reactor of claim 1, further comprising
a cooler configured to cool at least one of the pair of conductive sockets.

9. The reactor of claim 1, wherein
an amount of heat generated by the reaction tube and an amount of heat generated by the heating element are controlled by adjusting resistances of the reaction tube and the heating element.
